# EUROPEAN PATENT SPECIFICATION

(11) **EP 0 570 515 B1**
(45) Date of publication and mention of the grant of the patent: **05.06.1996**
(21) Application number: 92906776.7
(22) Date of filing: 24.01.1992
(51) Int. Cl.: C09J 7/02, C09J 133/08

(54) **POSITIONABLE ADHESIVE SYSTEM WITH HIGH SHEAR STRENGTH**
HOHE SCHERFESTIGKEIT AUFWEISENDES WIEDER ENTFERNBARES KLEBSYSTEM
SYSTEME D'ADHESIF POSITIONNABLE A RESISTANCE ELEVEE AU CISAILLEMENTS

(30) Priority: 06.02.1991 US 651468
(43) Date of publication of application: 24.11.1993
(73) Proprietor: MINNESOTA MINING AND MANUFACTURING COMPANY, St. Paul, Minnesota 55133-3427 (US)
(72) Inventor: STEELMAN, Ronald, S., Saint Paul, MN 55133-3427 (US); CRANDALL, Michael, D., Saint Paul, MN 55133-34327 (US); DELGADO, Joaquin, Saint Paul, MN 55133-3427 (US)
(74) Representative: Baillie, Iain Cameron
(86) International application number: US9200613
(87) International publication number: WO9213924

(56) References cited:
- EP-A- 0 419 020
- US-A- 4 968 562

## Description

### Field of the Invention

This invention relates to a positionable adhesive system displaying final elevated shear strength and peel adhesion, comprising a mixture of hollow, polymeric, acrylate, infusable, inherently tacky elastomeric microspheres together with a polymeric film-forming pressure sensitive latex adhesive.

### Background of the Invention

### Description of the Related Art

Positionable adhesives are those which allow for placement of an article containing such an adhesive onto a receptor in an exact position, because the article can be adjusted relative to the receptor after initial placement.

In some instances, the adhesive can be designated repositionable or repeatedly reuseable. Such adhesives exhibit aggressive tack but low peel adhesion properties, thus allowing repeated reuseability. Commercial products such as the 3M Brand Post-it^{TM} Notes display such adhesive characteristics.

Positionable adhesive systems, however, as used herein, generally display high peel adhesion and elevated shear strength after positioned placement.

Such systems have been disclosed for utility such as in the creation of sign faces or other graphic systems utilizing a vinyl film. For example, U.S. Patent Nos. 3,314,838; 3,331,729 and 3,413,168 disclose the concept of positionability based on a conventional film-forming adhesive having contained therein frangible glass bubbles. Positionability is obtained by the fact that the glass bubbles, during initial application of the coated article, allow for incomplete surface contact of the adhesive to the ultimate receptor. Once the article is properly positioned, pressure on the face of the article causes a rupture of the glass bubbles, thus allowing the full surface area to be contacted with the receptor, forming a strong bond. Obviously, once the frangible bubbles are ruptured, any further positionability characteristics are lost. In addition, articles coated with the adhesive containing the frangible bubbles inherently have added manufacturing steps and furthermore require special liners for application.

Reported adhesive systems for repositionable products range from the microsphere adhesives disclosed in U.S. Patent Nos. 3,691,140 and 4,166,152 to pattern-coated conventional adhesive systems. A further definition of an adhesive system containing such microspheres is disclosed in U.S. Patent No. 3,857,731, wherein a binder material is mixed with the microspheres. In some examples in this latter patent, the binder is an acrylate pressure sensitive adhesive. However, in all instances, the adhesion characteristics of the microspheres themselves are not taught to be overshadowed by the pressure sensitive adhesive. In this instance, the binder creates a physical "socket" to mechanically hold the individual microspheres onto a substrate, thus asserting to prevent undesired transfer of the microspheres to a receptor, increasing the retention of desired adhesive features.

U.S. Patent No. 4,735,837 discloses a similar system, wherein solid microspheres are mixed with a binder resin, which is taught to be a pressure sensitive adhesive. In this disclosure, the characteristics of adhesion and repositionability come from the pressure sensitive adhesive rather than the microspheres themselves. In fact, the patent discloses that the microspheres need not have adhesion capabilities at all.

In EPO 209,337, it is disclosed that the basic deficiency of solid microsphere adhesives is that they exhibit excessive transfer. In this instance, a reactive monomer is included with the adhesive microspheres during their preparation. The monomer remains unreacted during the adhesive polymerization, but subsequently undergoes a reaction with the binder and/or the backing to provide shear values of up to 50 Newtons, claimed to be higher than other microsphere-based systems.

In contrast with the foregoing, we have now discovered that an aqueous pressure sensitive adhesive system can be made utilizing a combination of hollow microspheres which are polymeric, acrylate, infusable and inherently tacky, together with a polymeric film-forming pressure sensitive adhesive. This aqueous blend, when applied to a backing, displays the desired positionability, ease of application, and typically associated with the positionable adhesives discussed above, and in addition displays the high shear strength, high peel adhesion and other performance characteristics normally associated with conventional film-forming pressure sensitive adhesives. In addition, we have found that this system provides for clean removal from most receptors.

### Summary of the Invention

In accordance with the invention there is provided a positionable aqueous adhesive composition and article containing same thereon, the composition comprising a blend or mixture of:
(a) an aqueous suspension of hollow, polymeric, infusible, inherently tacky elastomeric microspheres, wherein the microspheres are comprised of at least 85 parts by weight of at least one alkyl acrylate or methacrylate ester and up to 15 parts by weight of at least one polar monomer, and wherein a majority of the microspheres have a central cavity that is at least 10% of the diameter of the microspheres; and
(b) an aqueous film-forming pressure sensitive adhesive latex comprising at least one long chain alkyl acrylate having from 4 to 12 carbon atoms, wherein the weight ratio of the microspheres to the latex, on a solids basis, is from 12 to 1 to 39 to 1.

The adhesive is positionable, i.e., can be adjusted positionally after application to a receptor, yet displays high peel adhesion and shear strength, and displays clean removal from most receptors.

Graphic or decorative films, e.g., polyvinyl chloride can be applied to a receptor and positioned accurately, yet final peel adhesion and shear forces will be sufficiently elevated to allow the film to remain in place without movement or deformation.

### Detailed Description of the Invention

The hollow polymeric microspheres having utility herein are disclosed in detail in commonly assigned copending application Serial No. 276,767, now U.S. Patent No. 5,045,569.

Such microspheres comprise at least 85 parts by weight of at least one alkyl acrylate or alkyl methacrylate ester together with up to 15 parts by weight of at least one polar monomer, a majority of such microspheres having one or more interior voids containing a central cavity at least 10%, and most preferably, 30% of the diameter of the microsphere itself. An aqueous suspension of such hollow microspheres can be prepared by emulsification processes as disclosed in the subject application. Basically, they can be prepared by a two-step process comprised of forming a water-in-oil emulsion of an aqueous solution of one or more polar monomers in oil phase monomers; forming a water-in-oil-in-water emulsion by dispersing the first emulsion into an aqueous phase; followed by initiating polymerization, preferably by the application of heat or radiation. In addition, aqueous suspensions of such microspheres which contain moderately ionized polar monomers may be prepared by a simpler one-step process comprising the aqueous suspension polymerization of at least one alkyl acrylate or methacrylate ester monomer and at least one non-ionic polar monomer in the presence of at least one emulsifier capable of producing a water-in-oil emulsion inside the droplets, which is substantially stable during polymerization. Both methods produce an aqueous suspension of monomer droplets which upon polymerization become microspheres, the majority of which contain at least one interior cavity as discussed above.

The aqueous pressure sensitive adhesive latex used to blend with the aqueous suspension of hollow microspheres is composed of at least one long chain alkyl acrylate, i.e., containing from 4 to 12 carbon atoms, and preferably a polar monomer.

The film-forming pressure sensitive adhesive should be used at a level lower than the interspacial volume of the hollow microspheres, and the adhesive mixture contains a microsphere to film-forming adhesive ratio of from 39:1 to 12:1. Levels of film-forming adhesive significantly higher than this may produce adhesive coated articles that retain the characteristics of the film-forming pressure sensitive adhesive, detrimental to positionability.

The aqueous composition can be conventionally applied onto materials such as paper, and vinyl and polyester films, as by knife or notched-bar coating techniques, for example.

Additives can be included in the mixture to enhance specific objectives, such as the coating of the aqueous system or modifying performance characteristics thereof.

Anti-foams can be added, especially when the aqueous system of the invention is to be applied as a coating at high rates of speed. One example of such a material is "Foamaster" JMY, a conventional anti-foam agent from Henkel Process Chemicals, Inc.

Colorants can be added to enhance visual appearance, quality control, etc. Several vendors provide concentrates which add such desirable features.

Chemical crosslinkers, such as polyaziridines, can increase ply adhesion, high temperature shear and cohesive strengths. Such improvements, however, typically can provide a loss in tack and ultimate adhesion.

Viscosity control materials can be added to assist in coating quality and control. Examples include water soluble materials such as various cellulose products, polyacrylic acids, and vinyl alcohols.

The invention will now be described by the use of the following non-limiting examples, wherein all parts are by weight unless otherwise specified.

### Example 1

Hollow microspheres are manufactured in accordance with the following procedure:

In a one-liter resin reactor equipped with mechanical stirrer, thermometer and inlet-outlet lines for vacuum and nitrogen, 450 grams of deionized water, 141 grams of iso-octyl acrylate, 9.0 grams of acrylic acid and 0.5 gram of benzoyl peroxide were charged. Vacuum was applied to evacuate the reactor atmosphere and the reactor was purged with argon. The agitation was set to 400 RPM and when the initiator had dissolved, 1.5 grams of ammonium lauryl sulfate (Standapol A, from Henkel AG) were added. The temperature of the reactor was raised to 60°C and maintained for 22 hours, an argon purge being maintained during the polymerization. The suspension was then allowed to cool to room temperature. The reactor was then emptied and the suspension filtered. Optical microscopy showed hollow microspheres from 4 to 90 microns in diameter, the majority of the microspheres containing a central cavity of at least 30% of the diameter of the microspheres.

This microsphere suspension exhibits a pH typically between 2.0 and 4.0 and has a solids content of approximately 25%. With this procedure, the mean sphere diameter is typically 40-60 microns. (Different vessel proportions or mixing rates will alter the particle size, void diameter, etc.)

An aqueous pressure sensitive adhesive was prepared as follows:

A split-resin flask of 2000 ml. capacity was fitted with a variable speed agitator, condenser, purging tube for introducing nitrogen, and a recording controller. The following materials were added to the flask while purging same with nitrogen:

| | |
|---|---|
| 404 grams | Distilled water |
| 1.50 grams | Sodium dodecylbenzene sulfonate |
| 435 grams | Isooctyl acrylate |
| 60 grams | N-tert-octylacrylamide |
| 0.60 gram | Sodium bicarbonate |
| 5.0 grams | Sodium styrene sulfonate |

The solid N-tert-octylacrylamide was dissolved in the isooctyl acrylate before adding to the flask. The nitrogen purge was continued until the end of the run. The flask and its contents were heated to 50°C, at which temperature an initiator charge of 0.05 gram potassium persulfate and 0.0125 gram sodium metabisulfite was added. The reaction temperature was held at 50°C for approximately 24 hours to complete the polymerization. The resulting latex had no coagulum and the solids content was 54%.

The adhesives as prepared above were combined by adding, to a suitable container, 95.88 parts of the aqueous microsphere suspension at 25% solids; 3.6 parts of the aqueous pressure sensitive adhesive containing 54% solids; 0.52 part of ASE-60, commercially available from Rohm & Haas, as a rheological control agent. The pH was then raised with ammonium hydroxide to between 7.5 and 8.5.

The composition was then knife coated onto a polyvinyl chloride film and dried at 93°C (200°F) for 1 minute to provide a dry coating weight of 19 grams per square meter.

### Example 2

The adhesive of Example 1 was duplicated with the exception of utilizing 98.77 parts of the microsphere suspension and 1.23 parts of the pressure sensitive adhesive latex. This was applied to a polyvinyl chloride film as per Example 1.

### Example 3

An adhesive blend was prepared by mixing, in a suitable container, 96.23 parts of the aqueous microsphere suspension of Example 1; 2.99 parts of Gelva 2397, an aqueous pressure sensitive adhesive available from Monsanto, containing 65% solids; 0.52 part of ASE-60; followed by raising the pH with ammonium hydroxide to between 7.5 and 8.5; and the addition of 0.26 part of C-E2 color concentrate from Ciba-Geigy to provide opacity.

The composition was coated onto a polyvinyl chloride film at a dry coating weight of 19 grams per square meter, as per Example 1.

### Example 4

A film-forming pressure sensitive adhesive was manufactured as follows:

A split-resin flask of 2000 ml. capacity was fitted with a variable speed agitator, condenser, purging tube for introducing nitrogen, and a recording controller. The following materials were added to the flask while purging the flask with nitrogen:

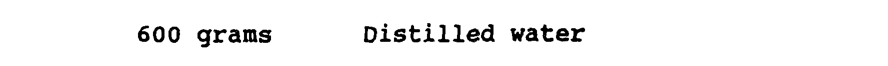

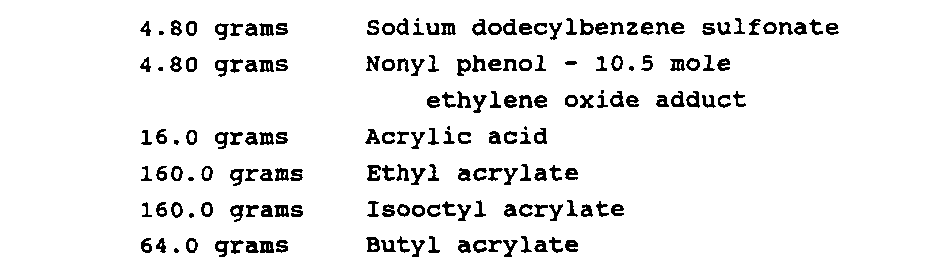

The nitrogen purge was continued until the end of the run. The flask and its contents were agitated at 300 rpm, and was heated to 32°C. At this temperature an initiator charge of 0.30 gram potassium persulfate and 0.08 gram sodium metabisulfite was added. An exothermic reaction occurred increasing the temperature to approximately 75°C after which the reaction mixture was allowed to cool. The resulting latex had no coagulum and the solids content was 40%.

An adhesive blend was then made by mixing 97.68 parts of the aqueous microsphere suspension of Example 1 with 1.57 parts of the film-forming pressure sensitive adhesive, together with 0.5 part of ASE-60, adjustment of pH to 7.5 to 8.5 with ammonium hydroxide, and the addition of 0.25 part of C-E2 color concentrate.

The blend was coated as per Example 1 onto a polyvinyl chloride film at a coating weight of 19 grams per square meter.

### Example 5

A film-forming pressure sensitive adhesive was made in accordance with Example 4 with the exception that the monomer mixture was comprised of 320 grams of ethyl acrylate, 64 grams of butyl acrylate, and 16 grams of acrylic acid. A blend was then prepared by adding 94.46 parts of the aqueous microsphere suspension of Example 1 to 4.77 parts of the film-forming pressure sensitive adhesive, again containing 40% solids, 0.52 part of ASE-60, pH adjustment to 7.5 to 8.5 with ammonium hydroxide, and the addition of 0.26 part of C-E2 color concentrate.

Again, the blend was applied onto polyvinyl chloride film at a coating weight of 19 grams per square centimeter as per Example 1.

The foregoing samples were tested for adhesion, both initially and after aging, and dynamic shear was also determined. These results are reported in TABLE 1.

For the adhesion tests, a 25.4 mm strip of sample was applied to a test panel using three passes with a 2.27 kg roller. The adhesion was tested by peeling the adhered sample at 180 degrees at a rate of 2.57 mm per minute. The value reported is an average reading over a five second period.

Samples were also aged at room temperature (27°C) for the designated time.

For the dynamic shear test, a .076 mm polyester tape was laminated to a 26.5 mm wide sample to be tested. The samples were adhered to a test panel, typically a painted metal panel, and trimmed such that a 25.7 mm by 25.7 mm contact area was retained. The sample was pulled with an Instron testing machine at a rate of 5 mm/minute. The maximum force required to remove the sample from the test panel is recorded.

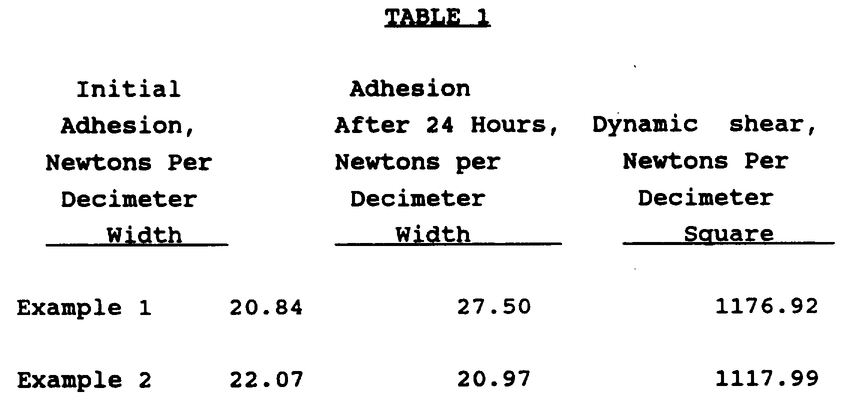

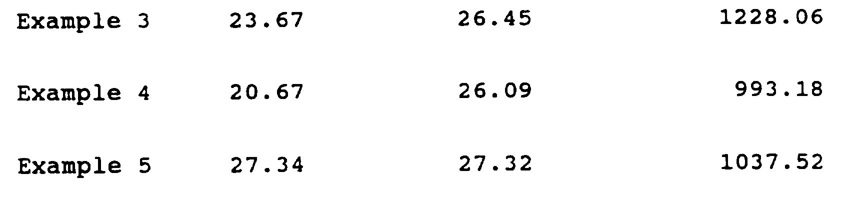

Visual observation of the samples showed no sign of adhesive transfer to the receptor test specimens.

For best performance, the blend should be applied at the minimum coating thickness required to obtain a monolayer of microspheres. High coating thicknesses are basically wasteful, while reduced coating thicknesses can result in incomplete surface coverage, and thus reduced peel adhesion and shear values. The preferred coating thickness is represented by the corresponding diameter of the average microsphere. For example, microspheres made by the aforementioned procedure typically average 40 to 60 microns in diameter, and thus the preferred coating thickness would be in that same range.

## Claims

1. An aqueous adhesive composition capable of displaying positionability, when applied as a layer to a substrate, while maintaining elevated shear strength and peel adhesion, comprising an aqueous blend of:
(a) an aqueous suspension of hollow, polymeric, infusible, inherently tacky elastomeric microspheres, wherein the microspheres are comprised of at least 85 parts by weight of at least one alkyl acrylate or methacrylate ester and up to 15 parts by weight of at least one polar monomer, and wherein a majority of the microspheres have a central cavity that is at least 10% of the diameter of the microspheres; and
(b) an aqueous film-forming pressure sensitive adhesive latex comprising at least one long chain alkyl acrylate having from 4 to 12 carbon atoms, wherein the weight ratio of the microspheres to the latex, on a solids basis, is from 12 to 1 to 39 to 1.

2. The composition of claim 1 wherein said latex further comprises at least one polar monomer.

3. An article comprising a substrate, having applied to at least a portion of at least one surface thereof, a coating of a positionable adhesive composition comprising:
(a) an aqueous suspension of hollow, polymeric, infusible, inherently tacky elastomeric microspheres; wherein the microspheres are comprised of at least 85 parts by weight of at least one alkyl acrylate or methacrylate ester and up to 15 parts by weight of at least one polar monomer, and wherein a majority of the microspheres have a central cavity that is at least 10% of the diameter of the microspheres; and
(b) an aqueous film-forming pressure sensitive adhesive latex comprising at least one long chain alkyl acrylate having from 4 to 12 carbon atoms, wherein the weight ratio of the microspheres to the latex, on a solids basis, is from 12 to 1 to 39 to 1.

4. The article of claim 3 wherein said substrate is a polyvinyl chloride film.

5. The article of any one of preceding claims 3-4 wherein said latex further comprises at least one polar monomer.

## Patentansprüche

1. Wässrige Klebstoffzusammensetzung, die bei Auftrag als eine Schicht auf ein Substrat Positionierbarkeit zeigen kann, während sie Scherfestigkeit und Schälfestigkeit bewahrt, umfassend eine wässrige Mischung aus:
(a) einer wässrigen Suspension von hohlen, polymeren, nichterweichbaren, eigenklebrigen, elastomeren Mikrokügelchen, die sich aus mindestens 85 Gewichtsteilen mindestens eines Alkylacrylat- oder Methacrylatesters und bis zu 15 Gewichtsteilen mindestens eines polaren Monomers zusammensetzen und von denen eine Mehrheit der Mikrokügelchen einen zentralen Hohlraum aufweist, der mindestens 10 Prozent des Durchmesser der Mikrokügelchen hat; sowie
(b) eine wässriger, filmbildender Haftklebstoff-Latex, umfassend mindestens ein langkettiges Alkylacrylat mit 4 ... 12 Kohlenstoffatomen, bei welchem das Gewichtsverhältnis der Mikrokügelchen zu dem Latex auf Feststoffbasis 12:1 ... 39:1 beträgt.

2. Zusammensetzung nach Anspruch 1, bei welcher der Latex ferner mindestens ein polares Monomer aufweist.

3. Artikel, umfassend ein Substrat, auf dessen Oberfläche mindestens auf einem Abschnitt eine Beschichtung mit einer positionierbaren Klebstoffzusammensetzung aufgebracht ist, welche Klebstoffzusammensetzung aufweist:
(a) eine wässrige Suspension von von hohlen, polymeren, nichterweichbaren, eigenklebrigen, elastomeren Mikrokügelchen, die sich aus mindestens 85 Gewichtsteilen mindestens eines Alkylacrylat- oder Methacrylatesters und bis zu 15 Gewichtsteilen mindestens eines polaren Monomers zusammensetzen und von denen eine Mehrheit der Mikrokügelchen einen zentralen Hohlraum aufweist, der mindestens 10 Prozent des Durchmesser der Mikrokügelchen hat; sowie
(b) eine wässriger, filmbildender Haftklebstoff-Latex, umfassend mindestens ein langkettiges Alkylacrylat mit 4 ... 12 Kohlenstoffatomen, bei welchem das Gewichtsverhältnis der Mikrokügelchen zu dem Latex auf Feststoffbasis 12:1 ... 39:1 beträgt.

4. Artikel nach Anspruch 3, bei welchem das Substrat eine Polyvinylchlorid-Folie ist.

5. Artikel nach einem der vorgenannten Ansprüche 3 und 4, bei welchem der Latex ferner mindestens ein polares Monomer aufweist.

## Revendications

1. Une composition adhésive aqueuse capable de présenter une aptitude au positionnement, lorsqu'elle est appliquée en tant que couche sur un substrat, tout en maintenant une résistance au cisaillement et une adhésion au pelage élevées, et comprenant un mélange aqueux de :
(a) une suspension aqueuse de microsphères creuses élastomères naturellement collantes, infusibles et polymères, dans laquelle les microsphères se composent d'au moins 85 parties en masse d'au moins un acrylate d'alkyle ou un ester de méthacrylate et jusqu'à 15 parties en masse d'au moins un monomère polaire, et dans laquelle une majorité des microsphères présente une cavité centrale qui est au moins égale à 10 % du diamètre des microsphères ; et
(b) un latex adhésif sensible à la pression formant un film aqueux comprenant au moins un acrylate d'alkyle à chaîne longue contenant 4 à 12 atomes de carbone, dans lequel le rapport de masse entre les microsphères et le latex, sur une base de solides, est compris entre 12:1 et 39:1.

2. La composition selon la Revendication 1, dans laquelle ledit latex comprend en outre au moins un monomère polaire.

3. Un article comprenant un substrat, et, enrobé sur au moins une portion d'au moins une surface de celui-ci un revêtement d'une composition d'adhésif positionnable comprenant :
(a) une suspension aqueuse de microsphères creuses élastomères naturellement collantes, infusibles et polymères, dans laquelle les microsphères se composent d'au moins 85 parties en masse d'au moins un acrylate d'alkyle ou un ester de méthacrylate et jusqu'à 15 parties en masse d'au moins un monomère polaire, et dans laquelle une majorité des microsphères présente une cavité centrale qui est au moins égale à 10 % du diamètre des microsphères; et
(b) un latex adhésif sensible à la pression formant un film aqueux comprenant au moins un acrylate d'alkyle à chaîne longue contenant 4 à 12 atomes de carbone, dans lequel le rapport de masse entre les microsphères et le latex, sur une base de solides, est compris entre 12:1 et 39:1.

4. L'article selon la Revendication 3, dans lequel ledit substrat est un film de chlorure de polyvinyle.

5. L'article selon l'une quelconque des Revendications précédentes 3 et 4, dans lequel ledit latex comprend en outre au moins un monomère polaire.
